# EUROPÄISCHE PATENTSCHRIFT

(11) **EP 1 742 986 B1**
(45) Veröffentlichungstag und Bekanntmachung des Hinweises auf die Patenterteilung: **29.04.2009**
(21) Anmeldenummer: 05729672.5
(22) Anmeldetag: 03.03.2005
(51) Int. Cl.: C08G 69/02, C08J 3/14, C09D 177/00

(54) **POLYMERPULVER MIT POLYAMID, VERWENDUNG IN EINEM FORMGEBENDEN VERFAHREN UND FORMKÖRPER, HERGESTELLT AUS DIESEM POLYMERPULVER**
POLYMER POWDER COMPRISING POLYAMIDE USE THEREOF IN A MOULDING METHOD AND MOULDED BODY MADE FROM SAID POLYMER POWDER
POUDRE POLYMERE CONTENANT DU POLYAMIDE, UTILISATION DE CETTE POUDRE DANS UN PROCEDE DE FAÇONNAGE ET CORPS FAÇONNE PRODUIT A PARTIR DE CETTE POUDRE POLYMERE

(30) Priorität: 27.04.2004 DE 102004020453
(43) Veröffentlichungstag der Anmeldung: 17.01.2007
(73) Patentinhaber: Evonik Degussa GmbH, 45128 Essen (DE)
(72) Erfinder: MONSHEIMER, Sylvia, 45721 Haltern am See (DE); BAUMANN, Franz-Erich, 48249 Dülmen (DE); GREBE, Maik, 44805 Bochum (DE); LOHMAR, Jörg, 44141 Dortmund (DE)
(86) Internationale Anmeldenummer: PCT/EP2005/050948
(87) Internationale Veröffentlichungsnummer: WO 2005/105891

(56) Entgegenhaltungen:
- WO-A-03/006724
- DE-A- 19 747 309
- DE-B1- 2 906 647

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft ein Polymerpulver auf Basis eines Polyamides des XY-Types, bevorzugt ein Polyamid des XY-Types hergestellt durch Polykondensation von Diaminen mit Dicarbonsäuren, die Verwendung dieses Pulvers in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über Suszeptoren, Absorber, Inhibitoren, Masken, oder über fokussierte Energieeinbringung, wie beispielsweise durch einen Laserstrahl oder über Glasfasern erfolgen. Der Energieeintrag wird über elektromagnetische Strahlung erreicht.

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, Ionomere und Polyamid.

Andere gut geeignete Verfahren sind das SrV-Verfahren wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Ionomer, Polyamid, oder Gemische davon, eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10-20 C/min keine Überlappung des Schmelze- und Rekristallisationspeaks zeigt, einen ebenfalls durch DSC bestimmten Kristallinitätsgrad von 10-90% aufweist, ein zahlenmäßiges Mittel des Molekulargewichtes Mn von 30.000-500.000 hat und dessen Quotient Mw/Mn im Bereich von 1 bis 5 liegt.

DE 197 47 309 beschreibt die Verwendung eines Polyamid 12-Pulvers mit erhöhtem Schmelzepeak und erhöhter Schmelzenthalpie, welches durch Umfällung eines zuvor durch Ringöffnung und anschließende Polykondensation von Laurinlactam hergestellten Polyamids erhalten wird Es handelt sich dabei um ein Polyamid des X-Typs.

Nachteilig ist bei der Verarbeitung mittels einem der oben beschriebenen formgebenden Verfahren, dass zur Vermeidung des sogenannten Curls die Temperatur in dem Bauraum möglichst gleichmäßig auf einem Niveau knapp unterhalb des Schmelzpunktes des polymeren Werkstoffes gehalten werden muss. Mit Curl ist ein Verzug des bereits aufgeschmolzenen Bereiches gemeint, der ein zumindest teilweises Herausragen aus der Bauebene bewirkt. Es besteht damit die Gefahr, dass beim Legen der nächsten Pulverschicht die herausragenden Bereiche verschoben oder sogar ganz herausgerissen werden. Das hat für den Prozess zur Folge, dass die Bauraumtemperatur insgesamt auf einem relativ hohen Niveau gehalten werden muss. Damit eine scharfe Trennung der Bereiche, in die elektromagnetische Energie eingebracht wurde, zu denen, die nicht aufgeschmolzen werden sollen, gegeben ist, ist eine möglichst hohe Schmelzenthalpie wünschenswert, die als scharfer Peak im DSC (Differential Scanning Calorimetry nach DIN 53765) ausgebildet ist. Auch Wärmeleitung und Wärmestrahlung aus dem aufgeschmolzenen Bereich, die ja nicht verhindert werden kann, hat zur Folge, dass der Formkörper mehr oder weniger stark von der Sollkontur abweicht. Eine möglichst hohe Schmelzenthalpie des Pulvers verhindert das Ansintern des Pulverbettes an den aufgeschmolzenen Bereich.

Aufgabe der vorliegenden Erfindung war es deshalb, ein Polymerpulver bereitzustellen, welches die Erzeugung möglichst formtreuer Formkörper mit möglichst hoher Oberflächengüte ermöglicht. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gemäß den Ansprüchen gefunden, dass sich durch die Verwendung von speziellen Polyamiden durch Fällungskristallisation Polymerpulver herstellen lassen, aus denen sich Formkörper durch ein schichtweise arbeitendes Verfahren, bei welchem selektiv Bereiche der jeweiligen Pulverschicht aufgeschmolzen werden, produzieren lassen, die Vorteile bezüglich der Oberflächengüte und Formtreue aufweisen und dabei vergleichbar gute Eigenschaften bezüglich Verarbeitung und mechanischer Kennwerte aufweisen wie aus einem Polymerpulver nach dem Stand der Technik, beispielsweise nach DE 197 47 309.

Gegenstand der vorliegenden Erfindung ist deshalb ein Polymerpulver zum Verarbeiten in einem schichtweise arbeitenden Verfahren, bei welchem selektiv Bereiche der jeweiligen Schicht aufgeschmolzen werden, welches dadurch gekennzeichnet ist, dass das Pulver zumindest ein Polyamid des XY-Types, hergestellt aus der Polykondensation von Diaminen und Dicarbonsäuren, bevorzugt ein Polyamid des XY-Types aus der Gruppe PA610, PA612, PA613, PA1010, PA1012, PA1212, aufweist. Besonders bevorzugt wird ein Polyamid des XY-Types PA1010, PA1012 oder PA1212 verwendet. Dabei weist das erfindungsgemäße Polymerpulver eine mittels DSC ermittelte Schmelzeenthalpie von mindestens 125 J/g auf sowie einen Rekristallisationspeak von mindestens 148 °C, bevorzugt eine Schmelzenthalpie von mindestens 130 J/g auf sowie einen Rekristallisationspeak von mindestens 150 °C, und besonders bevorzugt eine Schmelzenthalpie von mindestens 130 J/g auf sowie einen Rekristallisationspeak von mindestens 155 °C.

Außerdem sind Gegenstand vorliegenden Erfindung Formkörper, hergestellt durch ein schichtweise arbeitendes Verfahren, welches selektiv Bereiche der jeweiligen Schicht aufschmilzt, welche dadurch gekennzeichnet sind, dass sie zumindest ein Polyamid des XY-Types, hergestellt aus der Polykondensation von Diaminen und Dicarbonsäuren, bevorzugt ein Polyamid des XY-Types aus der Gruppe PA610, PA612, PA613, PA1010, PA1012, PA1212, aufweist. Besonders bevorzugt weist der Formkörper ein Polyamid des XY-Types aus der Gruppe aus PA1010, PA1012 oder PA1212 auf.

Das erfindungsgemäße Polymerpulver hat den Vorteil, dass aus ihm durch ein schichtweise arbeitendes Verfahren, bei dem selektiv Bereiche der jeweiligen Schicht aufgeschmolzen werden, hergestellte Formkörper eine bessere Formtreue und eine bessere Oberflächenqualität gegenüber Formkörpern aus herkömmlichen Polyamidpulvern haben.

Die aus dem erfindungsgemäßen Pulver hergestellten Formkörper weisen dabei ähnlich gute mechanische Eigenschaften auf wie die aus herkömmlichen Pulver hergestellten Formkörper.

Auch die Verarbeitungsfähigkeit des erfindungsgemäßen Pulvers ist vergleichbar mit der von herkömmlichen Polyamidpulvern.

Das erfindungsgemäße Polymerpulver wird nachfolgend beschrieben, ohne dass die Erfindung darauf beschränkt sein soll.

Das erfindungsgemäße Polymerpulver zum Verarbeiten in einem schichtweise arbeitenden Verfahren, bei welchem selektiv Bereiche der jeweiligen Schicht aufgeschmolzen werden, zeichnet sich dadurch aus, dass das Pulver zumindest XY-Polyamid aufweist. Es handelt sich dabei um Homopolymere mit der allgemeinen Formel:

- (NH-(CH₂)ₓ-NH-CO-(CH₂)_{y}-CO)_{n/2}-

Die Nomenklatur der Polyamide wird in der ISO 1874-1 geregelt. Insbesondere im Anhang A wird die Definition und Kennzeichnung aliphatischer linearer Polyamide beschrieben. Polyamide des Typs XY, deren Verwendung erfindungsgemäß ist, werden aus Polykondensation von Diaminen mit Dicarbonsäuren erhalten. Mit x ist die Anzahl der C-Atome im Diamin, mit y die Anzahl der C-Atome in der Dicarbonsäure gemeint. Das bevorzugte Pulver weist sowohl Diamine als auch Dicarbonsäuren aliphatischer (linearer) Natur auf. Dabei finden beispielsweise als Monomerbausteine Diamine der folgenden Gruppe Verwendung: Butandiamin, Hexamethylendiamin, Decandiamin, 1,12-Diaminododecan. Monomere für die Dicarbonsäuren sind beispielsweise Adipinsäure (Hexandisäure, b=4), Azelainsäure (Nonandisäure, b=7), Sebazinsäure (Decandisäure, b=8), Dodecandisäure (b=10), Brassylsäure (b=11), Tetradecandisäure (b=14), Pentadecandisäure (b=15), Octadecandisäure (b=18).

Erfindungsgemäßes Pulver erhält man beispielsweise durch ein Verfahren nach DE 29 06 647 B1 oder durch DE 197 08 146, wobei aber ein Polyamid des Types XY als Ausgangsmaterial verwendet wird. Das Polyamid wird in Ethanol gelöst und unter bestimmten Bedingungen auskristallisiert. Gegebenenfalls wird eine Schutzsiebung und weitere Klassierung oder Kaltmahlung angeschlossen. Der Fachmann kann die Bedingungen leicht durch orientierende Vorversuche herausfinden.

Überraschenderweise wurde festgestellt, dass die in DE 197 47 309 beschriebenen vorteilhaften Eigenschaften des Polyamidpulvers, nämlich eine hohe Schmelzenthalpie, weitaus vorteilhafter eingestellt werden kann, wenn ein Polyamid des XY-Types anstelle des X-Types verwendet wird Der Unterschied liegt in der Möglichkeit, Wasserstoffbrückenbindungen ausbilden zu können. Beispielsweise liegen bei einem PA66 - einem erfindungsgemäßen Polyamid des XY-Typs - die Carbonamidgruppen benachbarter Moleküle immer so gegenüber, dass jede funktionelle Gruppe ohne Deformation eine Wasserstoffbrücke ausbilden kann. Im Vergleich dazu ist dies beim PA 6, welches ein Beispiel für ein Polyamid des X-Types darstellt, nur unter zusätzlichem Energieaufwand durch Deformation der Moleküle möglich. Das führt unter anderem dazu, dass der Schmelzepeak beim PA 66 (ca. 260 °C) deutlich höher liegt als beim PA 6 (ca. 220 °C), ebenso wie die Schmelzenthalpie.

Eine hohe Rekristallisationstemperatur ist, anders als in DE 197 47 309 A1 ebenfalls von Vorteil, da einerseits das Verarbeitungsfenster nicht dadurch eingeengt wird - da spielen andere Faktoren eine größere Rolle - aber andererseits die Recyclingfähigkeit des Materials deutlich verbessert wird. Pulver, welches bei einem Bauprozess nicht aufgeschmolzen wurde, kann mit einer vorteilhafteren Auffrischrate wiederverwendet werden, ohne dass die Oberflächeneigenschaften darunter leiden, wenn die Rekristallisationstemperatur hoch ist. Daher weist das erfindungsgemäße Polymerpulver eine mittels DSC ermittelte Schmelzeenthalpie von mindestens 125 J/g auf sowie einen Rekristallisationspeak von mindestens 148 °C, bevorzugt eine Schmelzeenthalpie von mindestens 130 J/g auf sowie einen Rekristallisationspeak von mindestens 150 °C, und besonders bevorzugt eine Schmelzeenthalpie von mindestens 130 J/g auf sowie einen Rekristallisationspeak von mindestens 155 °C, auf. Die verschiedenen Parameter wurden mittels DSC (Differential Scanning Calorimetry) nach DIN 53765, bzw. nach AN-SAA 0663 bestimmt. Die Messsungen wurden mit einem Perkin Elmer DSC 7 mit Stickstoff als Spülgas und einer Aufheizrate sowie Abkühlrate von 20 K/min durchgeführt. Der Messbereich betrug -90 bis +250 °C.

Die Lösungsviskosität in 0,5%iger m-Kresollösung nach DIN 53727 beträgt bei den erfindungsgemäßen Polyamidpulvern bevorzugt 1,4 bis 2,1, besonders bevorzugt 1,5 bis 1,9, und ganz besonders bevorzugt zwischen 1,6 und 1,7.

Das erfindungsgemäße Polymerpulver weist vorzugsweise Polyamidpulver des XY-Types mit einer mittleren Partikelgröße von 10 bis 250 µm, vorzugsweise von 45 bis 150 µm und besonders bevorzugt von 50 bis 125 µm auf.

Die Ausgangsgtanulate zur Verarbeitung zu erfindungsgemäßen Pulvern werden kommerziell beispielsweise von der Degussa, Marl, Deutschland (Polyamid 612, Handelsnamen Vestamid D-Reihe) oder von der EMS Chemie, Donat, Schweiz (Technyl D, Polyamid 610) vertrieben.

Erfindungsgemäßes Polymerpulver kann außerdem Hilfsstoffe und/oder Füllstoff und/oder weitere organische oder anorganische Pigmente aufweisen. Solche Hilfsstoffe können z.B. Rieselhilfsmittel, wie z. B. gefällte und/oder pyrogene Kieselsäuren sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Polymerpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Die Füllstoffe können z.B. Glas-, Metall- oder Keramikpartikel, wie z.B. Glaskugeln, Stahlkugeln oder Metallgrieß oder Fremdpigmente, wie z.B. Übergangsmetalloxide sein. Die Pigmente können beispielsweise Titandioxidpartikel basierend auf Rutil oder Anatas sein, oder Russpartikel.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/ Rapid Manufacturing-Anlage.

Vorzugsweise weist erfindungsgemäßes Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Polymerpulver hergestellt wurden.

Es ist ebenso möglich, herkömmliche Polymerpulver mit erfindungsgemäßen Polymerpulvern zu mischen. Auf diese Weise lassen sich Polymerpulver mit einer weiteren Kombination von Oberflächeneigenschaften herstellen. Das Verfahren zur Herstellung solcher Mischungen kann z.B. DE 34 41 708 entnommen werden.

Zur Verbesserung des Schmelzeverlaufs bei der Herstellung der Formkörper kann ein Verlaufsmittel wie beispielsweise Metallseifen, bevorzugt Alkali- oder Erdalkalisalze der zugrunde liegenden Alkanmonocarbonsäuren oder Dimersäuren, dem gefällten Polyamidpulver zugesetzt werden. Die Metallseifenpartikel können in die Polymerpartikel eingearbeitet werden, es können aber auch Mischungen von feinteiligen Metallseifenpartikeln und Polymerpartikeln vorliegen.

Die Metallseifen werden in Mengen von 0,01 bis 30 Gew.-%, vorzugsweise 0,5 bis 15 Gew.-%, bezogen auf die Summe der im Pulver vorhandenen Polyamide eingesetzt. Bevorzugt wurden als Metallseifen die Natrium- oder Calciumsalze der zugrundeliegenden Alkanmonocarbonsäuren oder Dimersäuren eingesetzt. Beispiele für kommerziell verfügbar Produkte sind Licomont NaV 101 oder Licomont CaV 102 der Firma Clariant.

Zur Verbesserung der Verarbeitungsfähigkeit oder zur weiteren Modifikation des Polymerpulvers können diesem anorganische Fremdpigmente, wie z. B. Übergangsmetalloxide, Stabilisatoren, wie z.B. Phenole, insbesondere sterisch gehinderte Phenole, Verlaufs- und Rieselhilfsmittel, wie z. B. pyrogene Kieselsäuren sowie Füllstoffpartikel zugegeben werden. Vorzugsweise wird, bezogen auf das Gesamtgewicht an Polymeren im Polymerpulver, soviel dieser Stoffe den Polymeren zugegeben, dass die für das erfindungsgemäße Polymerpulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche aufgeschmolzen werden, bei denen erfindungsgemäße Polymerpulver, welche dadurch gekennzeichnet sind, dass sie zumindest ein Polyamid des XY-Types, hergestellt durch Polykondensation von Diaminen und Dicarbonsäuren, bevorzugt ein Polyamid des XY-Types aus der Gruppe aus PA66, PA610, PA612, PA1010, PA1012, PA1212, PA613, aufweisen. Besonders bevorzugt weisen die erfindungsgemäßen Formkörper ein Polyamid des XY-Types PA1010, PA1012 oder PA1212 auf. Polyamide des Typs XY, dessen Verwendung erfindungsgemäß ist, werden aus Polykondensation von Diaminen mit Dicarbonsäuren erhalten. Mit x ist die Anzahl der C-Atome im Diamin, mit y die Anzahl der C-Atome in der Dicarbonsäure gemeint. Das bevorzugte Pulver weist sowohl Diamine als auch Dicarbonsäuren aliphatischer (linearer) Natur auf. Dabei finden beispielsweise als Monomerbausteine Diamine der folgenden Gruppe Verwendung: Butandiamin, Hexamethylendiamin, Decandiamin, 1,12-Diaminododecan. Monomere für die Dicarbonsäuren sind beispielsweise Adipinsäure (Hexandisäure, b=4), Azelainsäure (Nonandisäure, b=7), Sebazinsäure (Decandisäure, b=8), Dodecandisäure (b=10), Brassylsäure (b=11), Tetradecandisäure (b=14), Pentadecandisäure (b=15), Octadecandisäure (b=18).

Die Energie wird durch elektromagnetische Strahlung eingebracht, und die Selektivität wird beispielsweise durch Masken, Auftragung von Inhibitoren, Absorbern, Suszeptoren, oder aber durch eine Fokussierung der Strahlung eingebracht. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerparkikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Andere gut geeignete Verfahren sind das SIV-Verfahren wie es in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht.

Die erfindungsgemäßen Formkörper, die durch ein schichtweise arbeitendes Verfahren, bei dem selektiv Bereiche aufgeschmolzen werden, hergestellt werden, zeichnen sich dadurch aus, dass sie zumindest ein Polyamid des XY-Types, hergestellt durch Polykondensation von Diaminen und Dicarbonsäuren, bevorzugt ein Polyamid des XY-Types aus der Gruppe aus PA66, PA610, PA612, PA613, PA1010, PA1012, PA1212, aufweisen. Besonders bevorzugt weisen die erfindungsgemäßen Formkörper ein Polyamid des XY-Types PA1010, PA1012, oder PA1212, auf. Polyamide des Typs XY, dessen Verwendung erfindungsgemäß ist, werden aus Polykondensation von Diaminen mit Dicarbonsäuren erhalten. Mit x ist die Anzahl der C-Atome im Diamin, mit y die Anzahl der C-Atome in der Dicarbonsäure gemeint. Das bevorzugte Pulver weist sowohl Diamine als auch Dicarbonsäuren aliphatischer (linearer) Natur auf. Dabei finden beispielsweise als Monomerbausteine Diamine der folgenden Gruppe Verwendung: Butandiamin, Hexamethylendiamin, Decandiamin, 1,12-Diaminododecan. Monomere für die Dicarbonsäuren sind beispielsweise Adipinsäure (Hexandisäure, b=4), Azelainsäure (Nonandisäure, b=7), Sebazinsäure (Decandisäure, b=8), Dodecandisäure (b=10), Brassylsäure (b=11), Tetradecandisäure (b=14), Pentadecandisäure (b=15), Octadecandisäure (b=18).

Die Formkörper können außerdem Füllstoffe und/oder Hilfsstoffe, wie z.B. thermische Stabilisatoren wie z.B. sterisch gehinderte Phenolderivate aufweisen. Füllstoffe können z.B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polymere auf.

Die folgenden Beispiele sollen das erfindungsgemäße Polymerpulver sowie dessen Verwendung beschreiben, ohne die Erfindung auf die Beispiele einzuschränken.

Die Messwerte der Laserbeugung wurden mit dem Malvern Mastersizer S, Ver. 2.18, erhalten.

### Beispiel 1: Umfällung von Polyamid 12 (PA 12) (nicht erfindungsgemäß)

400 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH2 werden mit 2500 1 Ethanol, vergällt mit 2-Butanon und 1 % Wassergehalt, innerhalb von 5 Stunden in einem 3 m3-Rührkessel (a = 160 cm) auf 145 °C gebracht und unter Rühren (Blattrührer, x = 80 cm, Drehzahl = 49 Upm) 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kühlrate die Manteltemperatur 2K - 3K unter der Innentemperatur gehalten. Die Innentemperatur wird mit gleicher Kühlrate auf 117 °C gebracht und dann 60 Minuten konstant gehalten. Danach wird weiter bei einer Kühlrate von 40 K/h abdestilliert und so die Innentemperatur auf 111 °C gebracht. Bei dieser Temperatur setzt die Fällung, erkennbar an der Wärmeentwicklung, ein. Die Destillationsgeschwindigkeit wird soweit erhöht, dass die Innentemperatur nicht über 111.3 °C ansteigt. Nach 25 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/ 400 mbar abdestilliert und der Rückstand anschließend bei 20 mbar/86 °C 3 Stunden nachgetrocknet.

Man erhält ein gefälltes PA 12 mit einem mittleren Korndurchmesser von 55 µm. Die Schüttdichte betrug 435 g/l.
Analog dem in Beispiel 1 gezeigten Vorgehen oder nach DE 197 08 146 wird ein Pulver aus PA 1012, PA1010, PA612, PA613 hergestellt.

### Beispiel 2: Einstufige Umfällung von PA 1010 (erfindungsgemäß)

Man fällt entsprechend Beispiel 1 400 kg eines durch Polykondensation von 1,10-Decandiamin und Sebacinsäure erhaltenen PA 1010-Musters mit folgenden Kenndaten um: ηᵣₑₗ = 1.84, [COOH] = 62 mmol/kg, [NH₂] = 55 mmol/kg.

Die Fällbedingungen werden gegenüber Beispiel 1 folgendermaßen abgeändert:
Fälltemperatur: 120 °C, Fällungszeit: 2 Stunden, Rührerdrehzahl: 90 Upm
Schüttdichte: 417 g/l

| | | |
|---|---|---|
| Siebanalyse: | < 32 µm: | 6.0 Gew.-% |
| | < 45 µm: | 8.5 Gew.-% |
| | < 63 µm: | 23.5 Gew.-% |
| | < 100 µm: | 96.1 Gew.-% |
| | < 160 µm: | 99.7 Gew.-% |
| | < 200 µm: | 99.9 Gew.-% |
| | < 250 µm: | 100.0 Gew.-% |

### Beispiel 3: Einstufige Umfällung von PA 1012 (erfindungsgemäß)

Man fällt entsprechend Beispiel 1 400 kg eines durch Polykondensation von 1,10-Decandiamin und Dodecandisäure erhaltenen PA 1012-Granulatmusters mit folgenden Daten um: ηᵣₑₗ = 1.76, [COOH] = 46 mmol/kg, [NH₂] = 65 mmol/kg.

Fällbedingungen werden gegenüber Beispiel 1 folgendermaßen abgeändert:
Lösetemperatur: 155 °C, Fälltemperatur: 123 °C, Fällungszeit: 40 Minuten,
Rührerdrehzahl: 110 Upm
Schüttdichte: 510 g/l

| | | |
|---|---|---|
| Siebanalyse: | < 32 µm: | 0.2 Gew.-% |
| | < 100 µm: | 44.0 Gew.-% |
| | < 250 µm: | 99,8 Gew.-% |

### Beispiel 4: Einstufige Umfällung von PA 1012 (erfindungsgemäß)

Man wiederholt Beispiel 3 mit folgenden Änderungen:
Fälltemperatur: 125 °C, Fällungszeit: 60 Minuten
Schüttdichte: 480 g/l

| | | |
|---|---|---|
| Siebanalyse: | < 32 µm: | 0.1 Gew.-% |
| | < 100 µm: | 72.8 Gew.-% |
| | < 250 µm: | 99,7 Gew.-% |

### Beispiel 5: Einstufige Umfällung von PA 1012 (erfindungsgemäß)

Man wiederholt Beispiel 4 mit folgenden Änderungen:
Fälltemperatur: 128 °C, Fällungszeit: 90 Minuten
Schüttdichte: 320 g/l

| | | |
|---|---|---|
| Siebanalyse: | < 32 µm: | 0.5 Gew.-% |
| | < 100 µm: | 98.5 Gew.-% |
| | < 250 µm: | 99,6 Gew.-% |

### Beispiel 6: Einstufige Umfällung von PA 1212 (erfindungsgemäß)

Man fällt entsprechend Beispiel 1 400 kg eines durch Polykondensation von 1,10-Decandiamin und 1,12-Dodecandisäure erhaltenen PA 1212-Granulatmusters mit folgenden Daten um: ηᵣₑₗ = 1.80, [COOH] = 3 mmol/kg, [NH₂] = 107 mmol/kg.

Die Fällbedingungen werden gegenüber Beispiel 1 folgendermaßen abgeändert:
Lösetemperatur: 155 °C, Fälltemperatur: 117 °C, Fällungszeit: 60 Minuten,
Rührerdrehzahl: 110 Upm
Schüttdichte: 450 g/l

| | | |
|---|---|---|
| Siebanalyse: | < 32 µm: | 0.5 Gew.-% |
| | < 100 µm: | 54.0 Gew.-% |
| | < 250 µm: | 99,7 Gew.-% |

### Beispiel 7: Zweistufige Umfällung von PA1010 (erfindungsgemäß)

400 kg ungeregeltes, eines durch Polykondensation von 1,10-Decandiamin und Sebacinsäure erhaltenen PA 1010-Musters - mit folgenden Kennwerten: ηᵣₑₗ = 1.84, [COOH] = 62 mmol/kg, [NH₂] = 55 mmol/kg - werden mit 2500 1 Ethanol, vergällt mit 2-Butanon und 1 % Wassergehalt, innerhalb von 5 Stunden in einem 3 m³-Rührkessel (a = 160 cm) auf 155 °C gebracht und unter Rühren (Blattrührer, d = 80 cm, Drehzahl = 90 Upm) 1 Stunde bei dieser Temperatur belassen. Anschließend wird die Manteltemperatur auf 135 °C reduziert und unter kontinuierlichem Abdestillieren des Ethanols mit einer Kühlrate von 25 K/h bei der derselben Rührerdrehzahl die Innentemperatur auf 138 °C gebracht. Von jetzt an wird bei gleicher Kühlrate die Manteltemperatur 2K - 3K unter der Innentemperatur gehalten. Die Innentemperatur wird mit gleicher Kühlrate auf 128 °C gebracht und dann 60 Minuten konstant gehalten. Danach wird weiter bei einer Kühlrate von 40 K/h abdestilliert und so die Innentemperatur auf 120 °C gebracht. Bei dieser Temperatur setzt die Fällung, erkennbar an der Wärmeentwicklung. Die Destillationsgeschwindigkeit wird soweit erhöht, dass die Innentemperatur nicht über 121.3 °C ansteigt. Nach 25 Minuten fällt die Innentemperatur ab, was das Ende der Fällung anzeigt. Man belässt die Innentemperatur noch weitere 35 Minuten bei 120°C. Durch weiteres Abdestillieren und Kühlung über den Mantel wird die Temperatur der Suspension auf 75 °C gebracht und die Suspension danach in einen Schaufeltrockner überführt. Das Ethanol wird bei 70 °C/ 400 mbar abdestilliert und der Rückstand anschließend bei 20 mbar/86 °C 3 Stunden nachgetrocknet.
Schüttdichte: 440 g/l

| | | |
|---|---|---|
| Siebanalyse: | < 32 µm: | 4.2 Gew.-% |
| | < 63 µm: | 28.6 Gew.-% |
| | < 100 µm: | 86.1 Gew.-% |
| | < 160 µm: | 99.7 Gew.-% |
| | < 250 µm: | 100.0 Gew.% |

### Beispiel 8: Zweistufige Umfällung von PA 1012 (erfindungsgemäß)

Man fällt entsprechend Beispiel 7 400 kg eines durch Polykondensation von 1,10-Decandiamin und Dodecandisäure erhaltenen PA 1012-Gmnulatmusters mit folgenden Daten um: ηᵣₑₗ = 1.76, [COOH] = 46 mmol/kg, [NN₂] = 65 mmol/kg (wie in Beispiel 3).

Die Fällbedingungen werden gegenüber Beispiel 7 folgendermaßen abgeändert:
Lösetemperatur: 155 °C, Keimbildungstemperatur: 141 °C, Fälltemperatur: 123 °C,
Eällungszeit: 40 Minuten, Rührerdrehzahl: 110 Upm
Schüttdichte: 530 g/l

| | | |
|---|---|---|
| Siebanalyse: | < 32 µm: | 1.3 Gew.-% |
| | < 100 µm: | 34.1 Gew.-% |
| | < 250 µm: | 99.7 Gew.-% |

### Beispiel 9: Zweistufige Umfällung von PA 1012(erfindungsgemäß)

Man wiederholt Beispiel 7 mit folgenden Änderungen:
Keimbildungszeit: 90 Minuten
Schüttdichte: 530 g/l

| | | |
|---|---|---|
| Siebanalyse: | < 32 µm: | 0.8 Gew.-% |
| | < 100 µm: | 32.2 Gew.-% |
| | < 250 µm: | 99.8 Gew.-% |

### Beispiel 10: Zweistufige Umfällung von PA 1012

Man wiederholt Beispiel 7 mit folgenden Änderungen:
Keimbildungszeit: 120 Minuten
Schüttdichte: 530 g/l

| | | |
|---|---|---|
| Siebanalyse: | < 32 µm: | 0.3 Gew.-% |
| | < 100 µm: | 28.4 Gew.-% |
| | < 250 µm: | 99.8 Gew.-% |

### Beispiel 11: Zweistufige Umfällung von PA 1212 (erfindungsgemäß)

Man fällt entsprechend Beispiel 7 400 kg eines durch Polykondensation von 1,10-Decandiamin und 1,12-Dodecandisäure erhaltenen PA 1212-Granulatmusters mit folgenden Daten um: ηᵣₑₗ = 1.80, [COOH] = 3 mmol/kg, [NH₂] = 107 mmol/kg.

Die Fällbedingungen werden gegenüber Beispiel 1 folgendermaßen abgeändert:
Lösetemperatur: 155 °C, Keimbildungstemperatur: 123 °C, Keimbildungszeit: 60 min
Fälltemperatur: 117 °C, Fällungszeit: 60 Minuten, Rührerdrehzahl: 110 Upm
Schüttdichte: 480 g/l

| | | |
|---|---|---|
| Siebanalyse: | < 32 µm: | 1.3 Gew.-% |
| | < 100 µm: | 56.6 Gew.-% |
| | < 250 µm: | 99.8 Gew.-% |

### Beispiel 12: Zweistufige Umfällung von PA 613(erfindungsgemäß)

Man wiederholt Beispiel 7 unter Einsatz eines durch Polykondensation von Hexamethylendiamin und Brassylsäure erhalteten PA613 - Lösungsviskosität ηᵣₑₗ = 1.83, [COOH] = 17 mmol/kg, [NH₂] = 95 mmol/kg - mit folgenden Änderungen:
Lösetemperatur: 152 °C, Keimbildungstemperatur: 125 °C, Keimbildungszeit: 45 Minuten
Fälltemperatur: 114 °C, Fällungszeit: 120 Minuten, Rührerdrehzahl: 110 Upm

| | | | |
|---|---|---|---|
| Schüttdichte: | 380 g/l | BET = 11,19 m²/g | |
| Laserbeugung: | | D10: | 55µm |
| | D50: | 78µm | |
| | D90: | 109µm | |

### Beispiel 13: Einstufige Umfällung von PA 613(erfindungsgemäß)

Man wiederholt Beispiel 1 unter Einsatz eines durch Polykondensation von Hexamethylendiamin und Brassylsäure erhalteten PA613 - Lösungsviskosität ηᵣₑₗ = 1.65, [COOH] = 33 mmol/kg, [NH₂] = 130 mmol/kg - mit folgenden Änderungen:
Lösetemperatur: 152 °C, Fälltemperatur: 119 °C, Fällungszeit: 150 Minuten, Rührerdrehzahl: 110 Upm

| | | | |
|---|---|---|---|
| Schüttdichte: | 426 g/l | BET = 7,63 m²/g | |
| | | | |
| Laserbeugung: | | D10: | 50 µm |
| | D50: | 89 µm | |
| | D90: | 132 µm | |

| | **Schmelz enthalpie [J/g]** | **Rekrisatllisations-peak [°C]** |
|---|---|---|
| **Nicht erfindungsgemäßes PA 12 aus Bsp. 1 (Fällungskristallisation)** | 112 | 141 |
| **PA 12 hydrolytisch polymerisiert (Vestamid der Degussa) Nicht erfindungsgemäß** | 71 | 141 |
| **PA 11 hydrolytisch polymerisiert (Rilsan der ELF Atochem S. A. Nicht erfindungsgemäß** | 87 | 157 |
| | | |
| **PA1012 hergestellt gemäß** DE 29 06 647 B1 **Erfindumgsgemäß** | 152 | 155 |
| **PA613 hergestellt gemäß** DE 29 06 647 B1 **Erfindungsgemäß** | 130 | 172 |
| **PA1010 hergestellt gemäß DE 29 06 647 B1 erfindungsgemäß** | 146 | 165 |
| **PA612 hergestellt gemäß DE 29 06 647 B1 erfindungsgemäß** | 131 | 185 |
| | 132 | 150 |

Anhand der Beispiele kann sehr gut erkannt werden, dass die erfindungsgemäßen Polyamidpulver eine deutlich erhöhte Schmelzenthalpie und auch eine höhere Rekristallisationstemperatur aufweisen als herkömmliche Polymerpulver. Dementsprechend lassen sich Bauteile mit höherer Oberflächenqualität herstellen, da weniger Pulver an den aufgeschmolzenen Bereichen anhaftet. Die Recyclingfähigkeit des erfindungsgemäßen Pulvers ist damit ebenfalls verbessert gegenüber herkömmlichen Polyamidpulvern.

## Patentansprüche

1. Verfahren zur Herstellung von Formkörpern durch ein schichtweise arbeitendes Verfahren, bei dem selektiv Bereiche der jeweiligen Polymerpulverschicht durch Eintrag elektromagnetischer Energie aufgeschmolzen werden,
**dadurch gekennzeichnet,**
**dass** das Pulver zumindest ein Homopolyamid, hergestellt durch Polykondensation von Diaminen und Dicarbonsäuren, mit einer Schmelzenthalpie von mindestens 125 J/g und einer Rekristallisationstemperatur von mindestens 148 °C aufweist.

2. Verfahren nach Anspruch 1,
**dadurch gekennzeichnet,**
**dass** das Pulver zumindest ein Homopolyamid, hergestellt durch Polykondensation von Diaminen und Dicarbonsäuren, mit einer Schmelzenthalpie von mindestens 130 J/g und einer Rekristallisationstemperatur von mindestens 150 °C aufweist.

3. Verfahren nach Anspruch 1,
**dadurch gekennzeichnet,**
**dass** das Pulver zumindest ein Homopolyamid, hergestellt durch Polykondensation von Diaminen und Dicarbonsäuren, mit einer Schmelzenthalpie von mindestens 130 J/g und einer Rekristallisationstemperatur von mindestens 155 °C aufweist.

4. Verfahren nach einem der vorhergehenden Ansprüche,
**dadurch gekennzeichnet,**
**dass** bei dem Verfahren selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird

5. Verfahren nach einem der vorhergehenden Ansprüche,
**dadurch gekennzeichnet,**
**dass** bei dem Verfahren selektiv Bereiche der jeweiligen Pulverschicht durch den Eintrag elektromagnetischer Energie aufgeschmolzen werden, wobei die Selektivität durch die Fokussierung eines Laserstrahls erzielt wird

6. Verfahren nach einem der vorhergehenden Ansprüche,
**dadurch gekennzeichnet,**
**dass** das Pulver zumindest ein Homopolyamid, hergestellt durch Polykondensation eines Diamins aus der Gruppe Butandiamin, Hexamethylendiamin, Decandiamin, 1,12-Diaminododecan, und einer Dicarbonsäure aus der Gruppe Adipinsäure, Azelainsäure, Sebazinsäure, Dodecandisäure, Brassylsäure Tetradecandisäure, Pentadecandisäure, Octadecandisäure, aufweist.

7. Verfahren nach einem der vorhergehenden Ansprüche,
**dadurch gekennzeichnet,**
**dass** das Pulver zumindest ein Homopolyamid, hergestellt durch Polykondensation von Decandiamin und Sebazinsäure (PA1010), aufweist.

8. Verfahren nach einem der vorhergehenden Ansprüche,
**dadurch gekennzeichnet,**
**dass** das Pulver zumindest ein Homopolyamid, hergestellt durch Polykondensation von Decandiamin und Dodecandisäure (PA1012), aufweist.

9. Verfahren nach einem der vorhergehenden Ansprüche,
**dadurch gekennzeichnet,**
**dass** das Pulver zumindest ein Homopolyamid, hergestellt durch Polykondensation von Hexamethylendiamin und Dodecandisäure (PA612), aufweist.

10. Verfahren nach einem der vorhergehenden Ansprüche,
**dadurch gekennzeichnet,**
**dass** das Pulver zumindest ein Homopolyamid, hergestellt durch Polykondensation von Hexamethylendiamin und Sebazinsäure (PA610), aufweist.

11. Verfahren nach einem der vorhergehenden Ansprüche,
**dadurch gekennzeichnet,**
**dass** das Pulver zumindest ein Homopolyamid, hergestellt durch Polykondensation von 1,12-Diamindodecan und Dodecandisäure (PA1212), aufweist.

12. Verfahren nach einem der vorhergehenden Ansprüche,
**dadurch gekennzeichnet,**
**dass** das Pulver zumindest ein Homopolyamid, hergestellt durch Polykondensation von Hexamethylendiamin und Brassylsäure (PA613), aufweist.

13. Verfahren nach einem der vorhergehenden Ansprüche,
**dadurch gekennzeichnet,**
**dass** das Polyamidpulver durch Fällungskristallisation erhalten wurde.

14. Verfahren nach einem der vorhergehenden Ansprüche,
**dadurch gekennzeichnet,**
**dass** das Polyamidpulver eine Schmelzenthalpie von mindestens 130 J/g aufweist.

15. Verfahren nach einem der vorhergehenden Ansprüche,
**dadurch gekennzeichnet,**
**dass** das Polyamidpulver eine Schmelzenthalpie von mindestens 135 J/g aufweist.

16. Verfahren nach einem der vorhergehenden Ansprüche,
**dadurch gekennzeichnet,**
**dass** das Polyamidpulver eine Schmelzenthalpie von mindestens 140 J/g aufweist.

17. Verfahren nach einem der vorhergehenden Ansprüche,
**dadurch gekennzeichnet,**
**dass** das Polyamidpulver eine Rekristallisationstemperatur von mindestens 150 °C aufweist.

18. Verfahren nach einem der vorhergehenden Ansprüche,
**dadurch gekennzeichnet,**
**dass** das Polyamidpulver eine Rekristallisationstemperatur von mindestens 155 °C aufweist.

19. Verfahren nach einem der vorhergehenden Ansprüche,
**dadurch gekennzeichnet,**
**dass** das Polyamidpulver eine Lösungsviskosität zwischen 1,4 bis 2,1 aufweist.

20. Verfahren nach einem der vorhergehenden Ansprüche,
**dadurch gekennzeichnet,**
**dass** das Polyamidpulver eine Lösungsviskosität zwischen 1,5 bis 1,9 aufweist.

21. Verfahren nach einem der vorhergehenden Ansprüche,
**dadurch gekennzeichnet,**
**dass** das Polyamidpulver eine Lösungsviskosität zwischen 1,6 bis 1,7 aufweist.

22. Verfahren nach einem der vorhergehenden Ansprüche,
**dadurch gekennzeichnet,**
**dass** das Polyamidpulver eine mittlere Partikelgröße zwischen 10 und 250 µm aufweist.

23. Verfahren nach einem der vorhergehenden Ansprüche,
**dadurch gekennzeichnet,**
**dass** das Polyamidpulver eine mittlere Partikelgröße zwischen 45 und 150 µm aufweist.

24. Verfahren nach einem der vorhergehenden Ansprüche,
**dadurch gekennzeichnet,**
**dass** das Polyamidpulver eine mittlere Partikelgröße zwischen 50 und 125 µm aufweist.

25. Verfahren nach einem der vorhergehenden Ansprüche,
**dadurch gekennzeichnet,**
**dass** Hilfsstoffe und/oder Füllstoff eingesetzt werden.

26. Verfahren nach einem der vorhergehenden Ansprüche,
**dadurch gekennzeichnet,**
**dass** als Hilfsstoff Rieselhilfsmittel eingesetzt werden.

27. Verfahren nach einem der vorhergehenden Ansprüche,
**dadurch gekennzeichnet,**
**dass** als Füllstoff Glaspartikel eingesetzt werden.

28. Verfahren nach einem der vorhergehenden Ansprüche,
**dadurch gekennzeichnet,**
**dass** als Hilfsstoff Metallseifen eingesetzt werden.

29. Verfahren nach einem der vorhergehenden Ansprüche,
**dadurch gekennzeichnet,**
**dass** organische und/oder anorganische Pigmente eingesetzt werden.

30. Verfahren nach einem der vorhergehenden Ansprüche,
**dadurch gekennzeichnet,**
**dass** Ruß eingesetzt wird.

31. Verfahren nach einem der vorhergehenden Ansprüche,
**dadurch gekennzeichnet,**
**dass** Titandioxid eingesetzt wird.

32. Formkörper, hergestellt durch ein Verfahren gemäß den Ansprüchen 1 bis 31

33. Formkörper nach Anspruch 32,
**dadurch gekennzeichnet,**
**dass** er zumindest ein Homopolyamid, hergestellt durch Polykondensation eines Diamins aus der Gruppe Butandiamin, Hexamethylendiamin, Decandiamin, 1,12-Diaminododecan, und einer Dicarbonsäure aus der Gruppe Adipinsäure, Azelainsäure, Sebazinsäure, Dodecandisäure, Brassylsäure, Tetradecandisäure, Pentadecandisäure, Octadecandisäure, aufweist.

34. Formkörper nach einem der vorhergehenden Ansprüche,
**dadurch gekennzeichnet,**
**dass** er zumindest ein Homopolyamid, hergestellt durch Polykondensation von Decandiamin und Sebazinsäure (PA1010), aufweist.

35. Formkörper nach einem der vorhergehenden Ansprüche,
**dadurch gekennzeichnet,**
**dass** er zumindest ein Homopolyamid, hergestellt durch Polykondensation von Decandiamin und Dodecandisäure (PA1012), aufweist.

36. Formkörper nach einem der vorhergehenden Ansprüche,
**dadurch gekennzeichnet,**
**dass** er zumindest ein Homopolyamid, hergestellt durch Polykondensation von Hexamethylendiamin und Dodecandisäure (PA612), aufweist.

37. Formkörper nach einem der vorhergehenden Ansprüche,
**dadurch gekennzeichnet,**
**dass** er zumindest ein Homopolyamid, hergestellt durch Polykondensation von Hexamethylendiamin und Sebazinsäure (PA610), aufweist.

38. Formkörper nach einem der vorhergehenden Ansprüche,
**dadurch gekennzeichnet,**
**dass** er zumindest ein Homopolyamid, hergestellt durch Polykondensation von 1,12-Diamindodecan und Dodecandisäure (PA1212), aufweist.

39. Formkörper nach einem der vorhergehenden Ansprüche,
**dadurch gekennzeichnet,**
**dass** er zumindest ein Homopolyamid, hergestellt durch Polykondensation von Hexamethylendiamin und Brassylsäure (PA613), aufweist.

40. Formkörper nach einem der vorhergehenden Ansprüche,
**dadurch gekennzeichnet,**
**dass** er Polyamidpulver, welches durch Fällungskristallisation erhalten wurde, aufweist.

41. Formkörper nach einem der vorhergehenden Ansprüche,
**dadurch gekennzeichnet,**
**dass** er ein Homopolyamid mit einer Lösungsviskosität zwischen 1,4 bis 2,1 aufweist.

42. Formkörper nach einem der vorhergehenden Ansprüche,
**dadurch gekennzeichnet,**
**dass** er ein Homopolyamid mit einer Lösungsviskosität zwischen 1,5 bis 1,9 aufweist.

43. Formkörper nach einem der vorhergehenden Ansprüche,
**dadurch gekennzeichnet,**
**dass** er ein Homopolyamid mit einer Lösungsviskosität zwischen 1,6 bis 1,7 aufweist.

44. Formkörper nach einem der vorhergehenden Ansprüche,
**dadurch gekennzeichnet,**
**dass** er Hilfsstoffe und/oder Füllstoffe aufweist.

45. Formkörper nach einem der vorhergehenden Ansprüche,
**dadurch gekennzeichnet,**
**dass** er als Hilfsstoff Rieselhilfsmittel aufweist.

46. Formkörper nach einem der vorhergehenden Ansprüche,
**dadurch gekennzeichnet,**
**dass** er als Füllstoff Glaspartikel aufweist.

47. Formkörper nach einem der vorhergehenden Ansprüche,
**dadurch gekennzeichnet,**
**dass** er als Hilfsstoff Metallseifen aufweist.

48. Formkörper nach einem der vorhergehenden Ansprüche,
**dadurch gekennzeichnet,**
**dass** er organische und/oder anorganische Pigmente aufweist.

49. Formkörper nach einem der vorhergehenden Ansprüche,
**dadurch gekennzeichnet,**
**dass** er Ruß aufweist.

50. Formkörper nach einem der vorhergehenden Ansprüche,
**dadurch gekennzeichnet,**
**dass** er Titandioxid aufweist.

## Claims

1. Process for the production of mouldings via a layer-by-layer process in which regions of the respective polymer pulverulent layer are selectively melted via introduction of electromagnetic energy,
**characterized in that**
the powder comprises at least one homopolyamide prepared via polycondensation of diamines and dicarboxylic acids, with an enthalpy of fusion of at least 125 J/g and with a recrystallization temperature of at least 148°C.

2. Process according to Claim 1,
**characterized in that**
the powder comprises at least one homopolyamide, prepared via polycondensation of diamines and dicarboxylic acids, with an enthalpy of fusion of at least 130 J/g and with a recrystallization temperature of at least 150°C.

3. Process according to Claim 1,
**characterized in that**
the powder comprises at least one homopolyamide, prepared via polycondensation of diamines and dicarboxylic acids, with an enthalpy of fusion of at least 130 J/g and with a recrystallization temperature of at least 155°C.

4. Process according to any of the preceding claims,
**characterized in that**
during the process, regions of the respective pulverulent layer are selectively melted via introduction of electromagnetic energy, the selectivity being achieved via the application of susceptors, of inhibitors, or of absorbers, or via masks.

5. Process according to any of the preceding claims,
**characterized in that**
during the process, regions of the respective pulverulent layer are selectively melted via introduction of electromagnetic energy, the selectivity being achieved via the focusing of a laser beam.

6. Process according to any of the preceding claims,
**characterized in that**
the powder comprises at least one homopolyamide prepared via polycondensation of a diamine from the group of butanediamine, hexamethylenediamine, decanediamine, 1,12-diaminododecane, and of a dicarboxylic acid from the group of adipic acid, azelaic acid, sebacic acid, dodecanedioic acid, brassylic acid, tetradecanedioic acid, pentadecanedioic acid, octadecanedioic acid.

7. Process according to any of the preceding claims,
**characterized in that**
the powder comprises at least one homopolyamide prepared via polycondensation of decanediamine and sebacic acid (PA1010).

8. Process according to any of the preceding claims,
**characterized in that**
the powder comprises at least one homopolyamide prepared via polycondensation of decanediamine and dodecanedioic acid (PA1012).

9. Process according to any of the preceding claims,
**characterized in that**
the powder comprises at least one homopolyamide prepared via polycondensation of hexamethylenediamine and dodecanedioic acid (PA612).

10. Process according to any of the preceding claims,
**characterized in that**
the powder comprises at least one homopolyamide prepared via polycondensation of hexamethylenediamine and sebacic acid (PA610).

11. Process according to any of the preceding claims,
**characterized in that**
the powder comprises at least one homopolyamide prepared via polycondensation of 1,12-diaminododecane and dodecanedioic acid (PA1212).

12. Process according to any of the preceding claims,
**characterized in that**
the powder comprises at least one homopolyamide prepared via polycondensation of hexamethylenediamine and brassylic acid (PA613).

13. Process according to any of the preceding claims,
**characterized in that**
the polyamide powder has been obtained via precipitative crystallization.

14. Process according to any of the preceding claims,
**characterized in that**
the polyamide powder has an enthalpy of fusion of at least 130 J/g.

15. Process according to any of the preceding claims,
**characterized in that**
the polyamide powder has an enthalpy of fusion of at least 135 J/g.

16. Process according to any of the preceding claims,
**characterized in that**
the polyamide powder has an enthalpy of fusion of at least 140 J/g.

17. Process according to any of the preceding claims,
**characterized in that**
the polyamide powder has a recrystallization temperature of at least 150°C.

18. Process according to any of the preceding claims,
**characterized in that**
the polyamide powder has a recrystallization temperature of at least 155°C.

19. Process according to any of the preceding claims,
**characterized in that**
the polyamide powder has a solution viscosity of from 1.4 to 2.1.

20. Process according to any of the preceding claims,
**characterized in that**
the polyamide powder has a solution viscosity of from 1.5 to 1.9.

21. Process according to any of the preceding claims,
**characterized in that**
the polyamide powder has a solution viscosity of from 1.6 to 1.7.

22. Process according to any of the preceding claims,
**characterized in that**
the polyamide powder has a median particle size of from 10 to 250 µm.

23. Process according to any of the preceding claims,
**characterized in that** the polyamide powder has a median particle size of from 45 to 150 µm.

24. Process according to any of the preceding claims,
**characterized in that**
the polyamide powder has a median particle size of from 50 to 125 µm.

25. Process according to any of the preceding claims,
**characterized in that**
auxiliaries and/or filler are used.

26. Process according to any of the preceding claims,
**characterized in that**
powder-flow aids are used as auxiliary.

27. Process according to any of the preceding claims,
**characterized in that**
glass particles are used as filler.

28. Process according to any of the preceding claims,
**characterized in that**
metal soaps are used as auxiliary.

29. Process according to any of the preceding claims,
**characterized in that**
organic and/or inorganic pigments are used.

30. Process according to any of the preceding claims,
**characterized in that**
carbon black is used.

31. Process according to any of the preceding claims,
**characterized in that**
titanium dioxide is used.

32. Moulding, produced by a process according to Claims 1 to 31.

33. Moulding according to Claim 32,
**characterized in that**
it comprises at least one homopolyamide prepared via polycondensation of a diamine from the group of butanediamine, hexamethylenediamine, decanediamine, 1,12-diaminododecane, and of a dicarboxylic acid from the group of adipic acid, azelaic acid, sebacic acid, dodecanedioic acid, brassylic acid, tetradecanedioic acid, pentadecanedioic acid, octadecanedioic acid.

34. Moulding according to any of the preceding claims,
**characterized in that**
it comprises at least one homopolyamide prepared via polycondensation of decanediamine and sebacic acid (PA1010).

35. Moulding according to any of the preceding claims,
**characterized in that**
it comprises at least one homopolyamide prepared via polycondensation of decanediamine and dodecanedioic acid (PA1012).

36. Moulding according to any of the preceding claims,
**characterized in that**
it comprises at least one homopolyamide prepared via polycondensation of hexamethylenediamine and dodecanedioic acid (PA612).

37. Moulding according to any of the preceding claims,
**characterized in that**
it comprises at least one homopolyamide prepared via polycondensation of hexamethylenediamine and sebacic acid (PA610).

38. Moulding according to any of the preceding claims,
**characterized in that**
it comprises at least one homopolyamide prepared via polycondensation of 1,12-diaminododecane and dodecanedioic acid (PA1212).

39. Moulding according to any of the preceding claims,
**characterized in that**
it comprises at least one homopolyamide prepared via polycondensation of hexamethylenediamine and brassylic acid (PA613).

40. Moulding according to any of the preceding claims,
**characterized in that**
it comprises polyamide powder which has been obtained via precipitative crystallization.

41. Moulding according to any of the preceding claims,
**characterized in that**
it comprises a homopolyamide with a solution viscosity of from 1.4 to 2.1.

42. Moulding according to any of the preceding claims,
**characterized in that**
it comprises a homopolyamide with a solution viscosity of from 1.5 to 1.9.

43. Moulding according to any of the preceding claims,
**characterized in that**
it comprises a homopolyamide with a solution viscosity of from 1.6 to 1.7.

44. Moulding according to any of the preceding claims,
**characterized in that**
it comprises auxiliaries and/or filler.

45. Moulding according to any of the preceding claims,
**characterized in that**
it comprises powder-flow aids as auxiliary.

46. Moulding according to any of the preceding claims,
**characterized in that**
it comprises glass particles as filler.

47. Moulding according to any of the preceding claims,
**characterized in that**
it comprises metal soaps as auxiliary.

48. Moulding according to any of the preceding claims,
**characterized in that**
it comprises organic and/or inorganic pigments.

49. Moulding according to any of the preceding claims,
**characterized in that**
it comprises carbon black.

50. Moulding according to any of the preceding claims,
**characterized in that**
it comprises titanium dioxide.

## Revendications

1. Procédé pour la fabrication de corps moulés par un processus fonctionnant par couches, dans lequel des zones de la couche respective de poudre de polymère sont sélectivement fondues par apport d'énergie électromagnétique, **caractérisé en ce que** la poudre comporte au moins un homopolyamide, préparé par polycondensation de diamines et d'acides dicarboxyliques, ayant une enthalpie de fusion d'au moins 125 J/g et une température de recristallisation d'au moins 148 °C.

2. Procédé selon la revendication 1, **caractérisée en ce que** la poudre comporte au moins un homopolyamide, préparé par polycondensation de diamines et d'acides dicarboxyliques, ayant une enthalpie de fusion d'au moins 130 J/g et une température de recristallisation d'au moins 150 °C.

3. Procédé selon la revendication 1, **caractérisée en ce que** la poudre comporte au moins un homopolyamide, préparé par polycondensation de diamines et d'acides dicarboxyliques, ayant une enthalpie de fusion d'au moins 130 J/g et une température de recristallisation d'au moins 155 °C.

4. Procédé selon l'une quelconque des revendications précédentes, **caractérisé en ce que** dans le procédé des zones de la couche respective de poudre sont sélectivement fondues par apport d'énergie électromagnétique, la sélectivité étant réalisée par l'introduction de suscepteurs, d'inhibiteurs, d'absorbeurs ou au moyen de masques.

5. Procédé selon l'une quelconque des revendications précédentes, **caractérisé en ce que** dans le procédé des zones de la couche respective de poudre sont sélectivement fondues par l'apport d'énergie électromagnétique, la sélectivité étant réalisée par la focalisation d'un rayon laser.

6. Procédé selon l'une quelconque des revendications précédentes, **caractérisé en ce que** la poudre comporte au moins un homopolyamide préparé par polycondensation d'une diamine choisie dans le groupe constitué par la butanediamine, l'hexaméthylènediamine, la décanediamine, le 1,12-diaminododécane, et d'un acide dicarboxylique choisi dans le groupe constitué par l'acide adipique, l'acide azélaïque, l'acide sébacique, l'acide dodécanedioïque, l'acide brassylique, l'acide tétradécanedioïque, l'acide pentadécanedioïque, l'acide octadécanedioïque.

7. Procédé selon l'une quelconque des revendications précédentes, **caractérisé en ce que** la poudre comporte au moins un homopolyamide préparé par polycondensation de décanediamine et d'acide sébacique (PA1010).

8. Procédé selon l'une quelconque des revendications précédentes, **caractérisé en ce que** la poudre comporte au moins un homopolyamide préparé par polycondensation de décanediamine et d'acide dodécanedioïque (PA1012).

9. Procédé selon l'une quelconque des revendications précédentes, **caractérisé en ce que** la poudre comporte au moins un homopolyamide préparé par polycondensation d'hexaméthylènediamine et d'acide dodécanedioïque (PA612).

10. Procédé selon l'une quelconque des revendications précédentes, **caractérisé en ce que** la poudre comporte au moins un homopolyamide préparé par polycondensation d'hexaméthylènediamine et d'acide sébacique (PA610).

11. Procédé selon l'une quelconque des revendications précédentes, **caractérisé en ce que** la poudre comporte au moins un homopolyamide préparé par polycondensation de 1,12-diaminododécane et d'acide dodécanedioïque (PA1212).

12. Procédé selon l'une quelconque des revendications précédentes, **caractérisé en ce que** la poudre comporte au moins un homopolyamide préparé par polycondensation d'hexaméthylènediamine et d'acide brassylique (PA613).

13. Procédé selon l'une quelconque des revendications précédentes, **caractérisé en ce que** la poudre de polyamide a été préparée par cristallisation par précipitation.

14. Procédé selon l'une quelconque des revendications précédentes, **caractérisé en ce que** la poudre de polyamide présente une enthalpie de fusion d'au moins 130 J/g.

15. Procédé selon l'une quelconque des revendications précédentes, **caractérisé en ce que** la poudre de polyamide présente une enthalpie de fusion d'au moins 135 J/g.

16. Procédé selon l'une quelconque des revendications précédentes, **caractérisé en ce que** la poudre de polyamide présente une enthalpie de fusion d'au moins 140 J/g.

17. Procédé selon l'une quelconque des revendications précédentes, **caractérisé en ce que** la poudre de polyamide présente une température de recristallisation d'au moins 150 °C.

18. Procédé selon l'une quelconque des revendications précédentes, **caractérisé en ce que** la poudre de polyamide présente une température de recristallisation d'au moins 155 °C.

19. Procédé selon l'une quelconque des revendications précédentes, **caractérisé en ce que** la poudre de polyamide présente une viscosité en solution comprise entre 1,4 et 2,1.

20. Procédé selon l'une quelconque des revendications précédentes, **caractérisé en ce que** la poudre de polyamide présente une viscosité en solution comprise entre 1,5 et 1,9.

21. Procédé selon l'une quelconque des revendications précédentes, **caractérisé en ce que** la poudre de polyamide présente une viscosité en solution comprise entre 1,6 et 1,7.

22. Procédé selon l'une quelconque des revendications précédentes, **caractérisé en ce que** la poudre de polyamide présente une taille moyenne de particule comprise entre 10 et 250 µm.

23. Procédé selon l'une quelconque des revendications précédentes, **caractérisé en ce que** la poudre de polyamide présente une taille moyenne de particule comprise entre 45 et 150 µm.

24. Procédé selon l'une quelconque des revendications précédentes, **caractérisé en ce que** la poudre de polyamide présente une taille moyenne de particule comprise entre 50 et 125 µm.

25. Procédé selon l'une quelconque des revendications précédentes, **caractérisé en ce qu'**on utilise des adjuvants et/ou une charge.

26. Procédé selon l'une quelconque des revendications précédentes, **caractérisé en ce qu'**on utilise comme adjuvant des adjuvants d'écoulement.

27. Procédé selon l'une quelconque des revendications précédentes, **caractérisé en ce qu'**on utilise comme charge des particules de verre.

28. Procédé selon l'une quelconque des revendications précédentes, **caractérisé en ce qu'**on utilise comme adjuvant des savons métalliques.

29. Procédé selon l'une quelconque des revendications précédentes, **caractérisé en ce qu'**on utilise des pigments organiques et/ou des pigments inorganiques.

30. Procédé selon l'une quelconque des revendications précédentes, **caractérisé en ce qu'**on utilise du noir de carbone.

31. Procédé selon l'une quelconque des revendications précédentes, **caractérisé en ce qu'**on utilise du dioxyde de titane.

32. Corps moulé, produit par un procédé selon les revendications 1 à 31.

33. Corps moulé selon la revendication 32, **caractérisé en ce qu'**il comporte au moins un homopolyamide préparé par polycondensation d'une diamine choisie dans le groupe constitué par la butanediamine, l'hexaméthylènediamine, la décanediamine, le 1,12-diaminododécane, et d'un acide dicarboxylique choisi dans le groupe constitué par l'acide adipique, l'acide azélaïque, l'acide sébacique, l'acide dodécanedioïque, l'acide brassylique, l'acide tétradécanedioïque, l'acide pentadécanedioïque, l'acide octadécanedioïque.

34. Corps moulé selon l'une quelconque des revendications précédentes, **caractérisé en ce qu'**il comporte au moins un homopolyamide préparé par polycondensation de décanediamine et d'acide sébacique (PA1010).

35. Corps moulé selon l'une quelconque des revendications précédentes, **caractérisé en ce qu'**il comporte au moins un homopolyamide préparé par polycondensation de décanediamine et d'acide dodécanedioïque (PA1012).

36. Corps moulé selon l'une quelconque des revendications précédentes, **caractérisé en ce qu'**il comporte au moins un homopolyamide préparé par polycondensation d'hexaméthylènediamine et d'acide dodécanedioïque (PA612).

37. Corps moulé selon l'une quelconque des revendications précédentes, **caractérisé en ce qu'**il comporte au moins un homopolyamide préparé par polycondensation d'hexaméthylènediamine et d'acide sébacique (PA610).

38. Corps moulé selon l'une quelconque des revendications précédentes, **caractérisé en ce qu'**il comporte au moins un homopolyamide préparé par polycondensation de 1,12-diaminododécane et d'acide dodécanedioïque (PA1212).

39. Corps moulé selon l'une quelconque des revendications précédentes, **caractérisé en ce qu'**il comporte au moins un homopolyamide préparé par polycondensation d'hexaméthylènediamine et d'acide brassylique (PA613).

40. Corps moulé selon l'une quelconque des revendications précédentes, **caractérisé en ce qu'**il comporte une poudre de polyamide qui a été préparée par cristallisation par précipitation.

41. Corps moulé selon l'une quelconque des revendications précédentes, **caractérisé en ce qu'**il comporte un homopolyamide ayant une viscosité en solution comprise entre 1,4 et 2,1.

42. Corps moulé selon l'une quelconque des revendications précédentes, **caractérisé en ce qu'**il comporte un homopolyamide ayant une viscosité en solution comprise entre 1,5 et 1,9.

43. Corps moulé selon l'une quelconque des revendications précédentes, **caractérisé en ce qu'**il comporte un homopolyamide ayant une viscosité en solution comprise entre 1,6 et 1,7.

44. Corps moulé selon l'une quelconque des revendications précédentes, **caractérisé en ce qu'**il comporte des adjuvants et/ou des charges.

45. Corps moulé selon l'une quelconque des revendications précédentes, **caractérisé en ce qu'**il comporte comme adjuvant des adjuvants d'écoulement.

46. Corps moulé selon l'une quelconque des revendications précédentes, **caractérisé en ce qu'**il comporte comme charge des particules de verre.

47. Corps moulé selon l'une quelconque des revendications précédentes, **caractérisé en ce qu'**il comporte comme adjuvant des savons métalliques.

48. Corps moulé selon l'une quelconque des revendications précédentes, **caractérisé en ce qu'**il comporte des pigments organiques et/ou des pigments inorganiques.

49. Corps moulé selon l'une quelconque des revendications précédentes, **caractérisé en ce qu'**il comporte du noir de carbone.

50. Corps moulé selon l'une quelconque des revendications précédentes, **caractérisé en ce qu'**il comporte du dioxyde de titane.
